Europäisches Patentamt

**European Patent Office**

**Office européen des brevets**

(19)

(11) Publication number: **0 047 548**
A2

(12) # EUROPEAN PATENT APPLICATION

(21) Application number: **81200917.3**

(22) Date of filing: **19.08.81**

(51) Int. Cl.³: **F 02 M 21/02**

(30) Priority: **04.09.80 NL 8005003**

(43) Date of publication of application: **17.03.82**
**Bulletin 82/11**

(84) Designated Contracting States: **AT BE CH DE FR GB IT LI LU NL SE**

(71) Applicant: **Vialle Autogas Apparatuur B.V., Hoogstraat 39, NL-5615 PA Eindhoven (NL)**

(72) Inventor: **Smeets, Andreas Leonie Marie Theodoor, Ir., Orleanshof 11, NL-5627 LM Eindhoven (NL)**

(74) Representative: **Noz, Franciscus Xaverius, Ir. et al, Algemeen Octrooibureau P.O. Box 645, NL-5600 AP Eindhoven (NL)**

(54) Equipment for influencing the supply of LPG to a combustion engine.

(57) The invention relates to an equipment for influencing the feed of LPG to a combustion engine comprising, viewed in the direction of flow of the LPG from a storage vessel to the combustion engine, a first pressure control from which the LPG originating from the storage vessel is supplied to an evaporator connected with the outlet side of the first pressure control and a second pressure control connected with the outlet side of the evaporator, the outlet side of said second control communicating with the combustion engine whereby between the first and second pressure controls means are provided for influencing the passage of the first pressure control in dependence on the pressure prevailing on the inlet side of the second pressure control.

EP 0 047 548 A2

- 1 -

Equipment for influencing the supply of LPG to a combustion engine.

The invention relates to an equipment for influencing the supply of LPG to a combustion engine comprising, viewed in the direction of flow of the LPG from a storage vessel to the combustion engine, a first pressure control to which is fed the LPG affluent from the storage vessel, an evoporator connected with the outlbt side of said first pressure control and a second pressure control connected with the outlet side of the evaporator and having its outlet side communicating with the combustion engine.

In the convention equipment of the kind set forth employed, for example, in LPG driven cars, the LPG is frequently fed to the first pressure control at a pressure varying between about 200 kPa and 800 kPa and conducted away from the first pressure control at a pressure of about 130 to 150 kPa. The LPG thus reduced in pressure flows through the evaporator to the second pressure control with the aid of which the pressure is reduced to about 100 kPa. Thus the pressure on the inlet side of the second pressure control is reduced, more or less in accordance with the pressure on the outlet side of the first pressure control by the flow losses in the evaporator.

These flow losses are affected inter alia by the temperature, the rate of gas flow through the evaporator and the design of the evaporator so that the pressure on the inlet side of the second pressure control may drastically vary during operation. Particularly when a high amount of LPG is consumed by the combustion engine, the pressure on the inlet side of the pressure control may dramatically drop, which may result in an adverse effect on the potential maximum degree of efficiency of the equipment.

Object of the invention is to provide an equipment of the aforesaid kind in which the above- mentioned disadvantage inherent in the known equipment can be avoided.

According to the invention this can be achieved by arranging between the first and second pressure controls means for influencing the passage of the first pressure control in dependence upon the pressure prevailing on the inlet side of the second pressure control.

By using the construction embodying the invention the influence of flow losses occurring between the first and the second pressure control can be materially reduced so that the pressure on the inlet side of the second pressure control can be kept at least substantially constant during operation and hence a regular operation of said pressure control can be ensured.

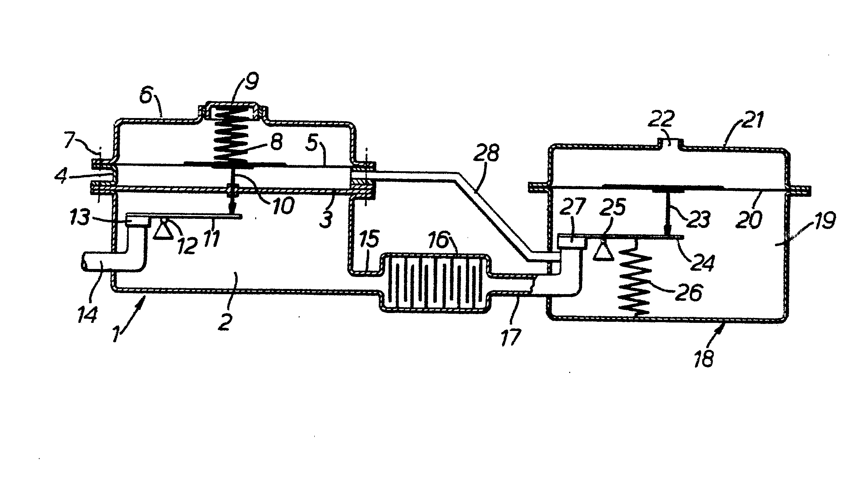

The invention will be described more fully hereinafter with reference to an embodiment of an equipment in accordance with the invention schematically shown in the accompanying Figure.

The equipment shown in the Figure comprises a first pressure control 1 having a box 2 closed at the top with the aid of a plate 3, which supports an annular intermediate piece 4. The annular intermediate piece 4 supports a diaphragm 5, on top of which is placed a cover 6. The various parts are clamped together with the aid of bolts 7 indicated only by their centre lines. Above the diaphragm 5 is arranged a compression spring 8, the tension of which is adjustable with the aid of a set screw 9 arranged in the cover 6. To the bottom side of the diaphragm 5 is fastened a coupling rod 10, which is passed in sealing relationship across the plate 3. The end of the rod 10 extending below the plate 3 is coupled with the end of a lever 11, which is rotatable about a fulcrum 12 disposed stationarily in the box 2. The end of the lever 11 remote from the rod 10 is provided with a closing member 13 by means of which an inlet duct 14 of the first pressure control 1 can be opened and closed.

An outlet duct 15 of the first pressure control communicating with the box 2 is connected with an evaporator 16. The outlet of the evaporator 16 communicates with an inlet duct 17 of the second pressure control 18. The pressure control 18 comprises a box 19 closed at the top by a diaphragm 20, which is clamped between the top rim of the box 19 and the lower rim of a cover 21 placed on the box 19. The cover 21 has an opening 22 so that the space 20 above the diaphragm enclosed by the cover 21 is subjected to atmospheric pressure.

With the aid of a coupling rod 23 the diaphragm 20 is coupled with a lever 24 located in the box 19 and being rotatable about a fulcrum 25 arranged stationarily in the box. Between the bottom of the box 19 and the lever 24 is arranged a tensile spring 26.

On the side of the pivot 25 remote from the point of engagement of the spring 26 on the lever 24 and the point of engagement of the coupling rod 23 on the lever 24 a closing member 27 is provided on the lever for opening and closing the inlet duct 17 of the second pressure control 18. With the box 19 of the second pressure control 18 is furthermore connected an outlet duct ( not shown), through which the LPG can be conducted to a combustion engine or the like.

With the end of the inlet duct 17 of the second pressure control located near the closing member 27 communicates a duct 28 establishing a connection between said end of the inlet duct 17 of the second pressure control and the space located between the cover plate 3 and the diaphragm 5 of the first pressure control. The pressure prevailing in said space during operation will, therefore, be equal to the pressure prevailing in the inlet duct of the second pressure control.

In operation LPG is supplied from a storage vessel to the first pressure control 1. The force required for changing the position of the closing member 13 depends upon the pressing force exerted by the spring 8 and on the counter-pressure prevailing in the space between the plate 3 and the diaphragm 5. The LPG admitted in the first pressure control will flow through the evaporator 16 into the inlet duct 17 of the second pressure control 18 and after having passed through the closing member 27 via the box 19 of the second pressure control and the outlet duct connected herewith to the combustion engine or the like.

If for any reason the pressure in the inlet duct 17 of the second pressure control should tend to drop, the pressure prevailing in the space between the plate 3 and the diaphragm 5 will also drop so that the closing member 13 will enlarge its opening and more LPG will be conveyed through the first pressure control 1 and the evaporator 16 to the inlet duct 17 of the second pressure control 18, as a result of which the pressure in the inlet duct 17 will increase. In this way, independently of the flow losses or the like occurring in the evaporator 16 it can be ensured in normal operation that a substantially constant pressure will prevail in the inlet duct 17 of the second pressure control and a more regular operation of the two pressure controls can be guaranteed.

Although the use of the connecting duct 28 for influencing the first pressure control in dependence on the pressure prevailing in the inlet duct of the second pressure control provides a particularly simple structure of the equipment, it will be obvious that within the spirit and scope of the invention other possibilities can be conceived for acting on the operation of the first pressure control in dependence on the pressure prevailing in the inlet duct for the second pressure control. For example, a pressure sensor may be mounted on the inlet duct 17 for actuating, for example, by electric or electronic agency, a member of a given kind to influence the force exerted on the lever 11, for example, by means of one or more magnets or the like.

-1-

CLAIMS

1.      An equipment for influcencing the feed of LPG to a combustion engine comprising, viewed in the direction of flow of the LPG from a storage vessel to the combustion engine, a first pressure control from which the LPG originating from the storage vessel is supplied to an evaporator connected with the outlet side of the first pressure control and a second pressure control connected with the outlet side of the evaporator, the outlet side of said second control communicating with the combustion engine characterized in that between the first and second pressure controls means are provided for influencing the passage of the first pressure control in dependence on the pressure prevailing on the inlet side of the second pressure control.

2.      An equipment as claimed in Claim 1 characterized in that with the inlet duct of the second pressure control communicates a duct for transferring the pressure prevailing in the inlet duct of the second pressure control to the first pressure control.

3.      An equipment as claimed in Claim 2 characterized in that the duct communicating with the inlet duct of the second pressure control is in communication with a space of the first pressure control, in which a diaphragm is located, which is connected with the aid of a coupling rod with a closing member of the inlet duct of the first pressure control.